# EUROPEAN PATENT SPECIFICATION

(11) **EP 3 702 188 B1**
(45) Date of publication and mention of the grant of the patent: **04.08.2021**
(21) Application number: 20156699.9
(22) Date of filing: 11.02.2020
(51) Int. Cl.: B60J 7/00, B60J 7/11, B60J 7/12

(54) **ELECTRIC VEHICLE AND KIT OF PANEL-LIKE ACCESSORY UNITS, FOR THE CONFIGURATION OF THE VEHICLE ROOF**
ELEKTROFAHRZEUG UND BAUSATZ AUS PLATTENARTIGEN ZUBEHÖREINHEITEN ZUR KONFIGURATION DES FAHRZEUGDACHS
VÉHICULE ÉLECTRIQUE ET KIT D'UNITÉS ACCESSOIRES DE TYPE PANNEAU POUR LA CONFIGURATION DU TOIT DU VÉHICULE

(30) Priority: 01.03.2019 IT 201900002987
(43) Date of publication of application: 02.09.2020
(73) Proprietor: FCA Italy S.p.A., 10135 Torino (IT)
(72) Inventor: CALONACI, Mr. Daniele, I-10135 Torino (IT); DILILLO, Mr. Alberto, I-10135 Torino (IT); PELLEGRINO, Mr. Dario, I-10135 Torino (IT)
(74) Representative: Notaro, Giancarlo

(56) References cited:
- EP-A1- 0 599 109
- WO-A1-93/24341
- DE-A1- 3 429 880
- DE-A1-102017 115 675

## Description

The present invention relates to an electric vehicle, provided with a kit of a panel-like accessory units for the configuration of the vehicle roof. The invention is applicable for example to an electric vehicle of the "city car" category, while it is understood that the invention is anyhow of general application and can be applied to any type of vehicle.

A vehicle of the type indicated in the preamble of claim 1 is known from document DE 34 29 880 A1.

The object of the invention is that of proposing an electric vehicle which can be produced in a simple manner and with reduced costs, while being able to offer a plurality of different configurations, each characterized by novel and advantageous functionalities.

In view of achieving this object, the invention provides an electric vehicle having the features of claim 1.

Preferably, the kit also includes one or more among:
- a panel configured with a support for a taxi sign,
- a panel carrying a predetermined array of holes provided for receiving one or more accessories, such as a luggage carrier, in different positions which can be selected as desired,
- a panel to which an autonomous drive control module and/or a GPS module are associated.

Due to the above indicated features, the electric vehicle according to the invention can be transformed easily according to various novel and advantageous configurations.

Further features and advantages of the invention will become apparent from the description which follows with reference to the annexed drawings, given purely by way of non-limiting example, in which:
- figures 1A, 1B are an exploded perspective view and a top view which show an embodiment of the electric vehicle according to the invention in which the roof is provided with a panel with photovoltaic solar cells,
- figure 1C is a cross-section in a longitudinal vertical plane of the roof of the vehicle of figures 1A, 1B,
- figure 1D is a view in cross-section at an enlarged scale of the detail of the device for the electric connection between the panel and the vehicle body,
- figures 2A, 2B show variants of figures 1A, 1B which refer to an embodiment in which the roof is provided with a flexible panel,
- figures 3A, 3B are variants of figures 1A, 1B which show the roof provided with a luggage container,
- figure 3C shows a view in cross-section in a vertical longitudinal plane of the roof according to the configuration of figures 3A, 3B,
- figures 4A, 4B, 4C show variants of figures 1A, 1B, 1C which refer to an embodiment for a vehicle for use in a car-sharing service or as a taxi,
- figures 4D, 4E are perspective views at an enlarged scale of a detail of the configuration of figures 4A, 4C, in two different operative conditions, and
- figures 5A, 5B, 5C and 6A, 6B, 6C refer to two further variants.

In all the annexed drawings, numeral 1 generally designates an electric vehicle, in this specific case a "city car", whose body 2 includes a roof 3 having an opening 4 extending throughout a substantial portion of the roof 3 and provided along its edge with one or more peripheral ceiling strips made of elastomeric material (not shown in the drawings).

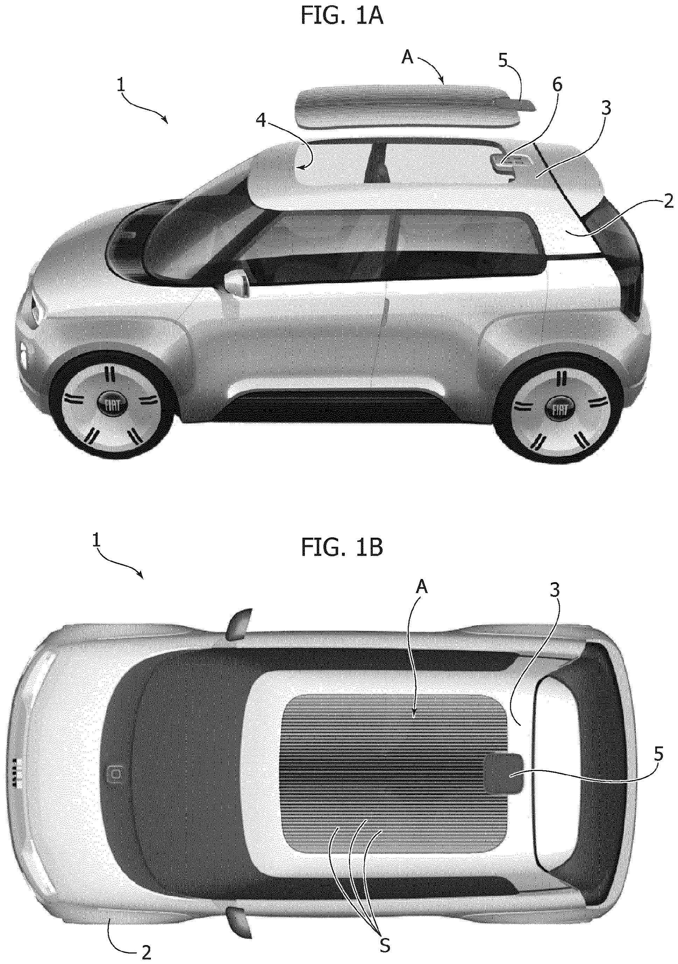

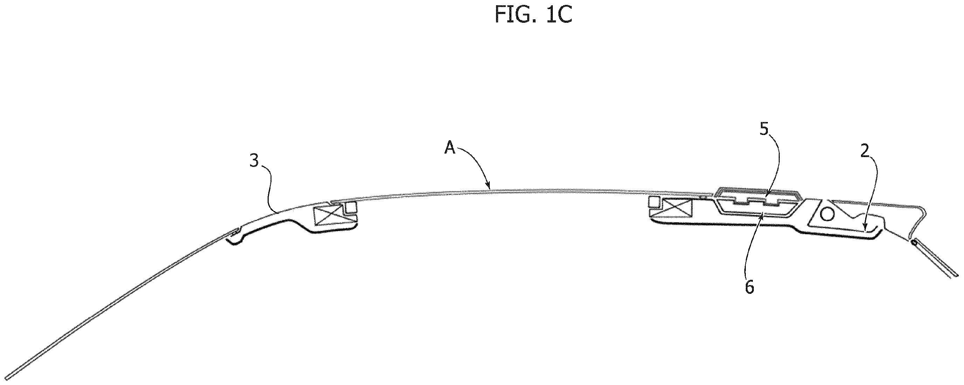

In the configuration of figures 1A, 1C, the opening 4 is covered with a panel-like accessory unit A provided with an array of photovoltaic solar cells. At a central portion of its rear side, the panel A carries a connector member 5 which is configured for cooperating with a connector member 6 provided on the body 2 of the vehicle, at the central portion of the rear edge of the opening 4. Figure 1C shows the two connector members 5, 6 in the coupled condition.

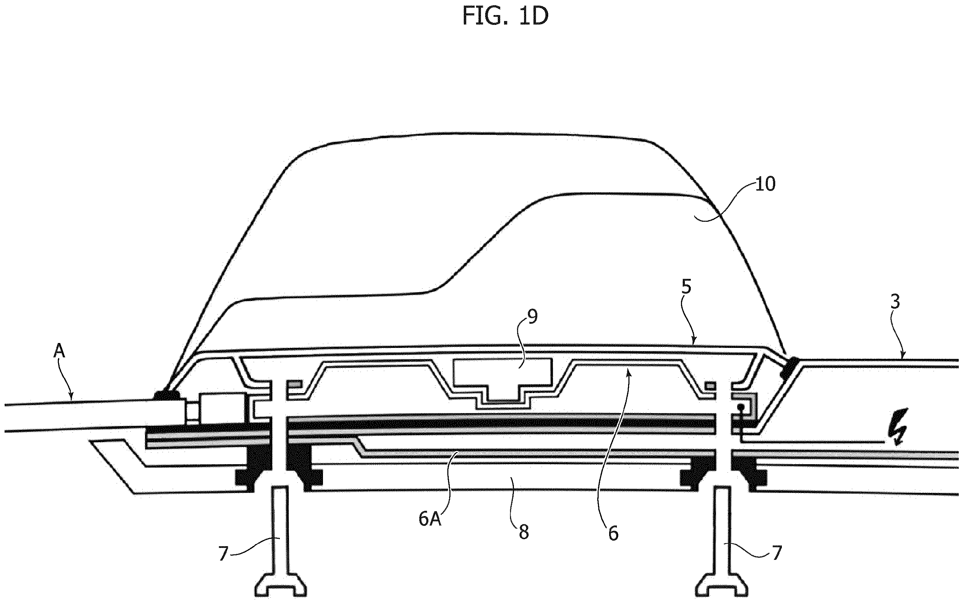

Figure 1D shows the coupled condition of the two connectors which are held in this coupled conditioned by screws 7 which can be engaged from below through a body 6A for supporting the connector member 6, through a trimming panel 8, through the structure of a connector 6 and through the structure of a connector 5. Reference numeral 9 designates a GPS device which can be provided at the connector members 5,6. To the connector member 5 there is associated a fin 10 within which there can be arranged accessories devices such as a telecommunication antenna.

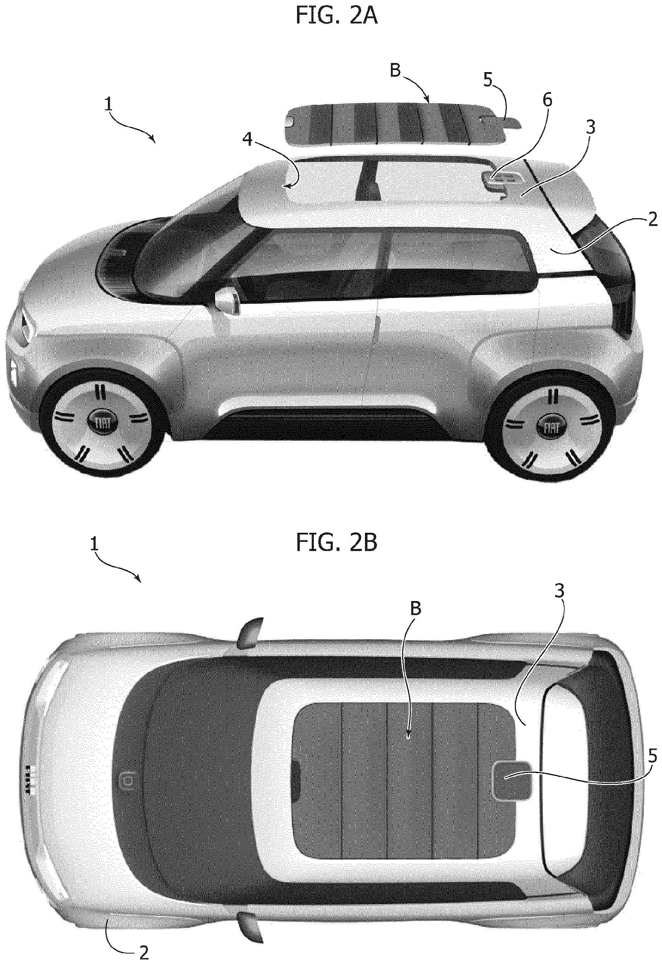

In figures 2A, 2B, the parts corresponding to those shown in figures 1A, 1B are indicated with the same reference numerals. In the case of the configuration shown in figures 2A, 2B the panel-like accessory unit is a unit B comprising a panel of a flexible material, for example fabric arranged on an articulated framework, which enables the panel B to be folded into a configuration of a reduced dimension, in which it leaves the opening 4 at least partially opened.

The panel unit B is provided with a connector member 5 cooperating with a connector member 6 carried by the vehicle body, according to what has been described and illustrated with reference to the solution of figures 1A, 1B.

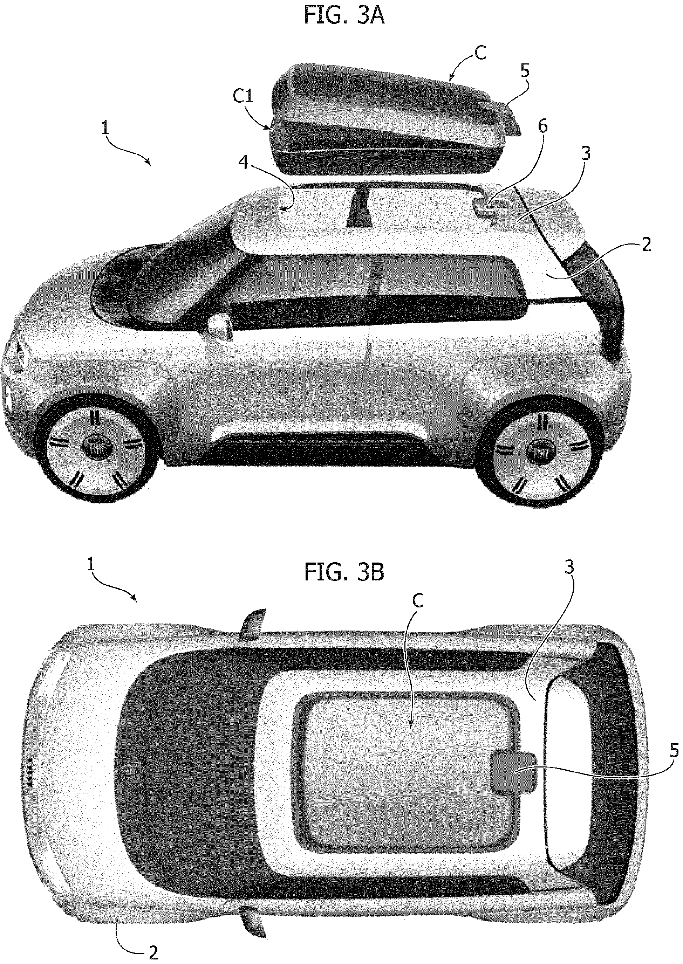

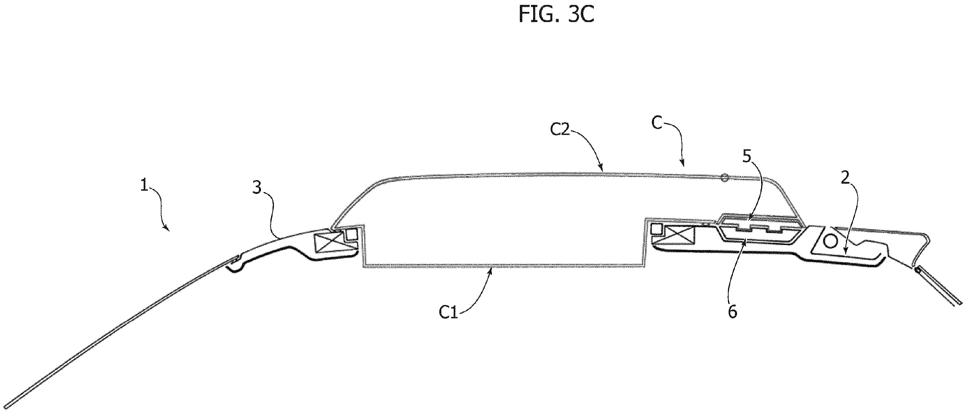

The solution shown in figures 3A, 3B, 3C comprises an accessory unit C in the form of a luggage container, with a container element C1 to which a lid C2 is connected. The body of the luggage container C is received and held within the opening 4 so as to cover this opening. Also in this case, the body of the container C has a connector member 5 cooperating with a connector member 6 carried by the body 2 of the vehicle, the connector members 5,6 can be made similarly to what has been described with reference to the solution of figures 1A, 1B. Figure 3C shows a cross-section of the body of the luggage container C, with the connector member 5 provided on the rear side of the container C.

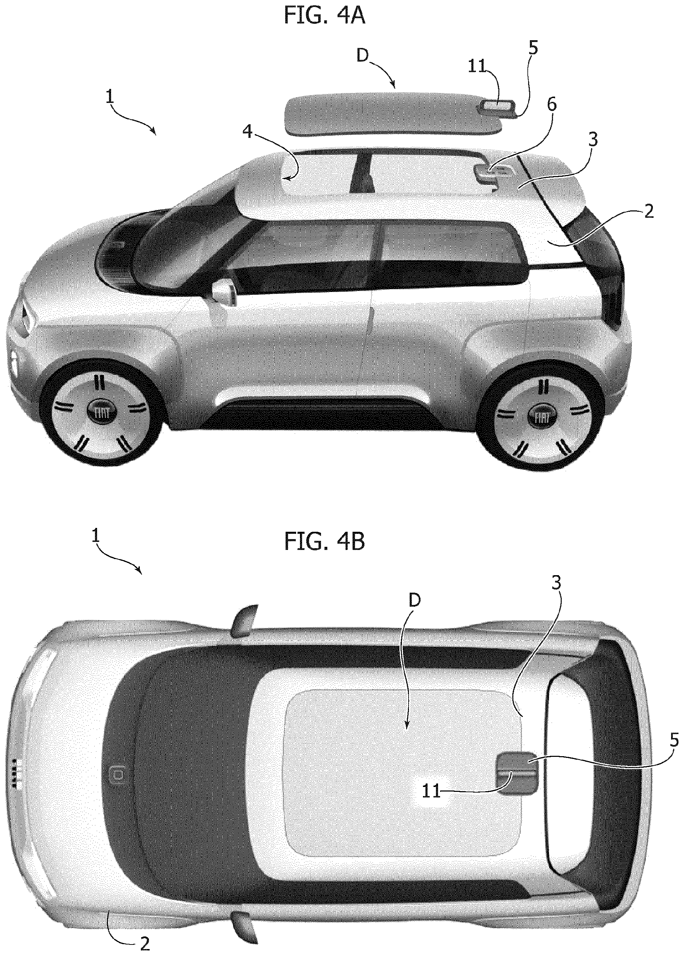

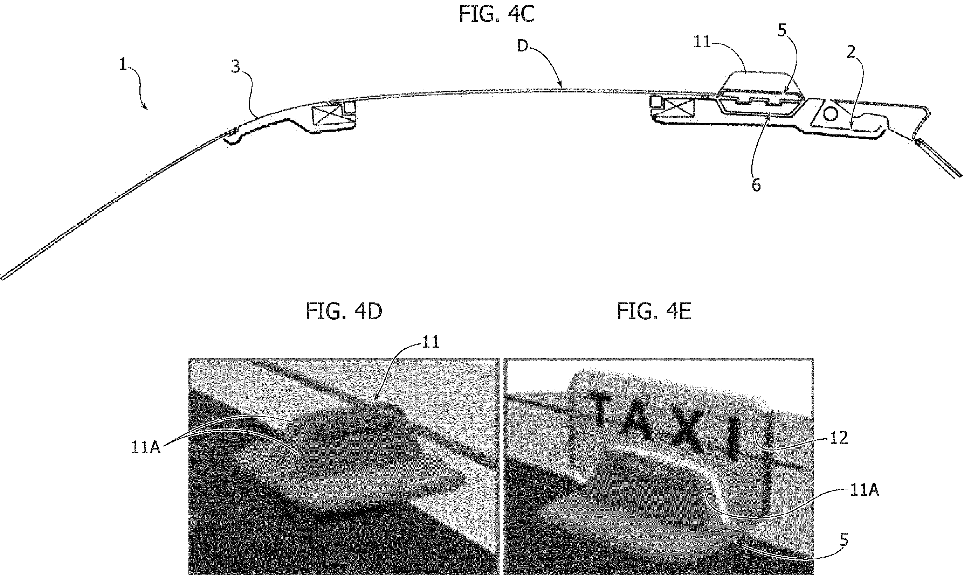

Figures 4A-4E refer to a vehicle configuration for use as a taxi, in which the opening 4 in the roof of the vehicle is covered by a panel-like accessory unit D, carrying a support 11 for a taxi sign on its rear side, in addition to the connector member 5.

As shown in the details of figures 4D, 4E, the support 11 can be rotated by 90° around a vertical axis so as to bring two longitudinal side supports 11A from a position (for use in a car-sharing service) aligned with the longitudinal direction of the vehicle (figure 4D) to a position which is directed transversally with respect to this longitudinal direction (for use as a taxi), in which said side supports may receive and held therebetween a taxi sign 12.

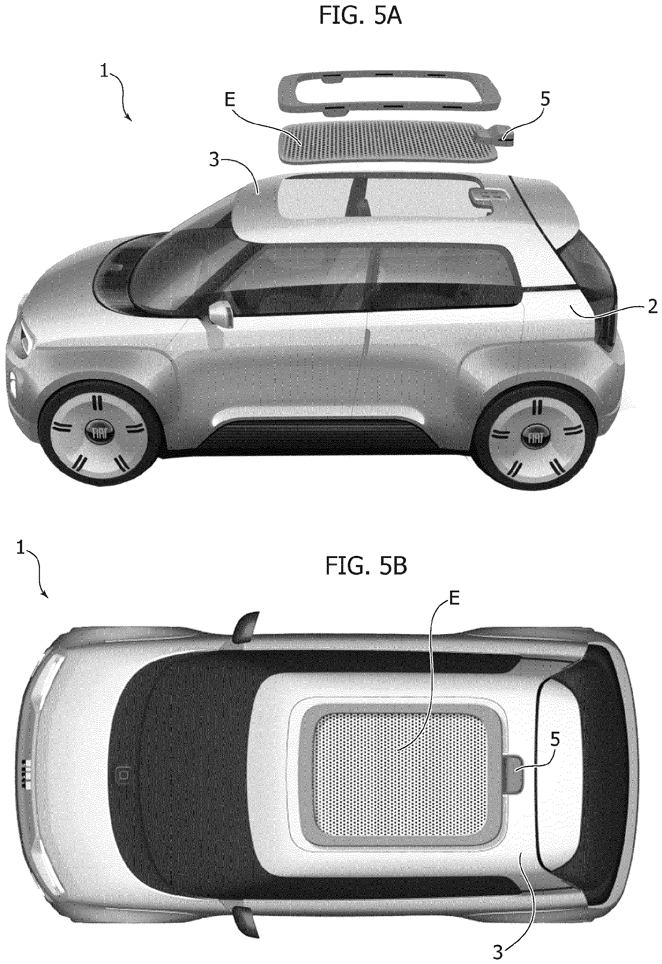

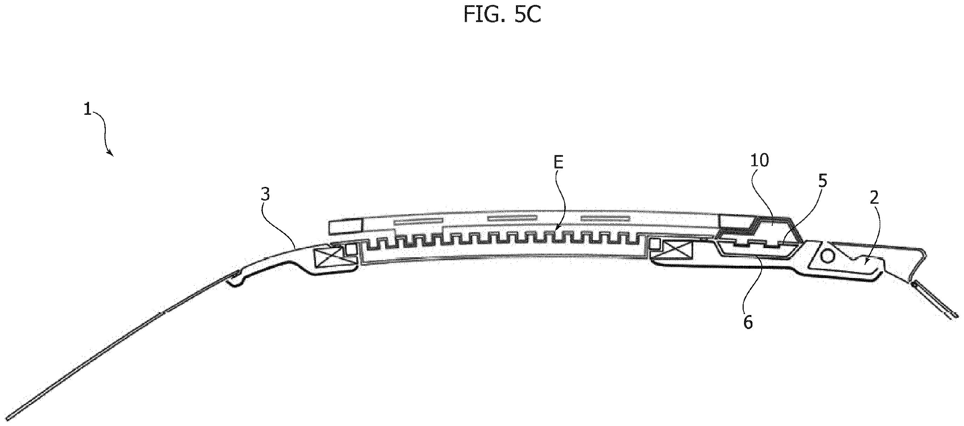

The solution of figures 5A, 5B, 5C has a panel E carrying a predetermined distribution of holes provided for receiving one or more accessories, such as a luggage carrier, at a different position so which can be selected as desired. Preferably the fin 10 contains a GPS device.

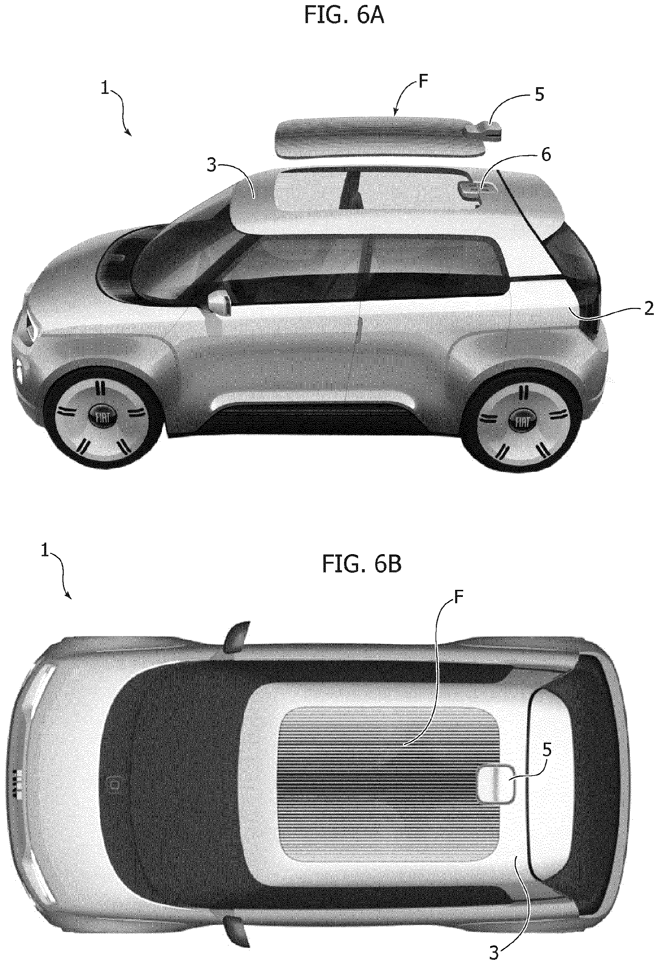

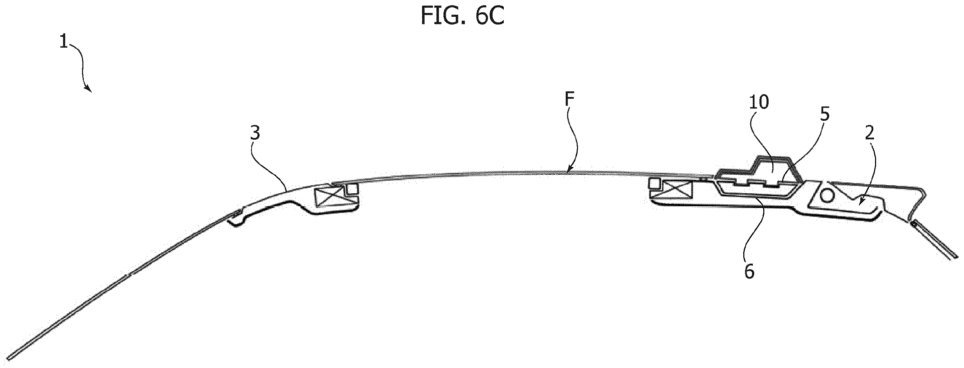

The solution of figures 6A, 6B, 6C has a panel F to which an autonomous drive control module, and preferably also a GPS module, are associated.

Due to the above indicated features, the vehicle can be easily and rapidly configured according to different architectures, so as to fulfill different functionalities.

Naturally, while the principle of the invention remains the same, the details of construction and the embodiments may widely vary with respect to what has been described and illustrated purely by way of example, without departing from the scope of the present invention, as defined in the appended claims.

## Claims

1. Vehicle, for example a vehicle of the "city car" category, having a body (2) including a roof (3) having an opening (4) extending throughout a substantial portion of the roof (3) and a kit of panel-like accessory units (A, B, C, D) which can be selected as desired for covering said opening (4) of the roof (3) in order to provide a desired configuration of the vehicle,
wherein each of said panel-like accessory units (A, B, C, D) comprises a connector member (5) provided on the rear side of the panel-like unit and configured for cooperating with a corresponding connector member (6) provided on the roof portion forming part of the vehicle body (2), at the rear side of said opening (4) in the roof, and
wherein said kit of panel-like accessory units comprises at least:
- a panel (B) of flexible material, configured for being folded into a position in which it leaves said opening (4) at least partially opened, and
- a luggage container (C) having a first container element (C1) configured for being secured within said opening (4) of the roof, and a lid (C2) mounted on said first container element (C1),
said vehicle being **characterized in that**:
- the vehicle is an electric vehicle,
- said kit of panel-like accessory units further comprises a panel (A) carrying an array of photovoltaic solar cells (S),
- said connector member (5) provided on each panel-like unit (A, B, C, D) is an electric connector member which includes a GPS device and a telecommunication antenna, and is connected by cables or in a wireless mode to the electric circuit of the vehicle.

2. Vehicle according to claim 1, **characterized in that** said kit of a panel-like accessory units further comprises one or more among:
- a panel (D) configured as a support (11) for a taxi sign (12),
- a panel (E) carrying a predetermined array of holes provided for receiving one or more accessories, such as a luggage carrier, at different positions which can be selected as desired, a panel (F) to which an autonomous drive control module and/or a GPS module are associated.

3. Electric vehicle according to claim 2, **characterized in that** said support (11) for the taxi sign (12) is adapted to be rotated around a vertical axis between an inoperative position and an operative position in which the taxi sign (12) is arranged transversely with respect to the longitudinal direction of the vehicle.

## Patentansprüche

1. Fahrzeug, beispielsweise ein Fahrzeug der Kategorie "Stadtauto", mit einer Karosserie (2), die ein Dach (3) mit einer Öffnung (4) enthält, die sich über einen wesentlichen Teil des Dachs (3) erstreckt, und einem Satz plattenartiger Zubehör-Einheiten (A, B, C, D), die nach Wunsch zum Abdecken der Öffnung (4) des Dachs (3) ausgewählt werden können, um eine gewünschte Konfiguration des Fahrzeugs zu schaffen,
wobei jede der plattenartigen Zubehör-Einheiten (A, B, C, D) ein Verbindungselement (5) umfasst, das an der Rückseite der plattenartigen Einheit vorhanden und so ausgeführt ist, dass es mit einem entsprechenden Verbindungselement (6) zusammenwirkt, das an dem Dachabschnitt, der einen Teil der Fahrzeugkarosserie (2) bildet, an der Rückseite der Öffnung (4) in dem Dach vorhanden ist, und
der Satz plattenartiger Zubehör-Einheiten wenigstens umfasst:
- eine Platte (B) aus flexiblem Material, die so ausgeführt ist, dass sie in eine Position gefaltet wird, in der sie die Öffnung (4) wenigstens teilweise geöffnet lässt, und
- einen Gepäckbehälter (C) mit einem ersten Behälterelement (C1), das so ausgeführt ist, dass es in der Öffnung (4) des Dachs befestigt werden kann, und einem Deckel (C2), der an dem ersten Behälterelement (C1) angebracht ist,
wobei das Fahrzeug **dadurch gekennzeichnet ist, dass**:
- das Fahrzeug ein Elektrofahrzeug ist ,
- der Satz plattenartiger Zubehör-Einheiten des Weiteren eine Platte (A) umfasst, die eine Anordnung von Fotovoltaik-Solarzellen (S) trägt,
- das Verbindungselement (5), das an jeder plattenartigen Einheit (A, B, C, D) vorhanden ist, ein elektrisches Verbindungselement ist, das eine GPS-Vorrichtung sowie eine Telekommunikationsantenne enthält und das über Kabel oder in einem Drahtlos-Modus mit dem Stromkreis des Fahrzeugs verbunden ist.

2. Fahrzeug nach Anspruch 1, **dadurch gekennzeichnet, dass** der Satz plattenartiger Zubehör-Einheiten des Weiteren umfasst:
- eine Platte (D), die als ein Träger (11) für ein Taxischild (12) ausgeführt ist, oder/und
- eine Platte (E), die eine vorgegebene Anordnung von Löchern trägt, die zum Aufnehmen eines oder mehrerer Zubehörteils/Zubehörteile, wie eines Gepäckträgers, an verschiedenen, beliebig wählbaren Positionen vorgesehen sind, oder/und eine Platte (F), der ein Modul für autonomes Fahren und/oder ein GPS-Modul zugeordnet sind/ist.

3. Elektrofahrzeug nach Anspruch 2, **dadurch gekennzeichnet, dass** der Träger (11) für das Taxischild (12) so eingerichtet ist, dass er zwischen einer Ruheposition und einer Betriebsposition, in der das Taxischild (12) quer zu der Längsrichtung des Fahrzeugs angeordnet ist, um eine vertikale Achse herum gedreht wird.

## Revendications

1. Véhicule, par exemple un véhicule de la catégorie "citadine", ayant une carrosserie (2) comportant un toit (3) ayant une ouverture (4) s'étendant sur une partie substantielle du toit (3) et un kit d'unités accessoires en forme de panneau (A, B, C, D) qui peut être choisi comme souhaité pour couvrir ladite ouverture (4) du toit (3) afin de fournir une configuration souhaitée du véhicule,
dans lequel chacune desdites unités accessoires en forme de panneau (A, B, C, D) comprend un élément connecteur (5) prévu sur le côté arrière de l'unité en forme de panneau et configuré pour coopérer avec un élément connecteur correspondant (6) prévu sur la partie de toit faisant partie de la carrosserie de véhicule (2), sur le côté arrière de ladite ouverture (4) dans le toit, et
dans lequel ledit kit d'unités accessoires en forme de panneau comprend au moins :
- un panneau (B) en matériau flexible, configuré pour être plié dans une position dans laquelle il laisse ladite ouverture (4) au moins partiellement ouverte, et
- un contenant à bagages (C) ayant un premier élément de contenant (C1) configuré pour être fixé à l'intérieur de ladite ouverture (4) du toit, et un couvercle (C2) monté sur ledit premier élément de contenant (C1),
ledit véhicule étant **caractérisé en ce que** :
- le véhicule est un véhicule électrique,
- ledit kit d'unités accessoires en forme de panneau comprend en outre un panneau (A) portant un réseau de cellules solaires photovoltaïques (S),
- ledit élément connecteur (5) prévu sur chaque unité en forme de panneau (A, B, C, D) est un élément connecteur électrique qui comporte un dispositif GPS et une antenne de télécommunication, et est relié par des câbles ou en mode sans fil au circuit électrique du véhicule.

2. Véhicule selon la revendication 1, **caractérisé en ce que** ledit kit d'unités accessoires en forme de panneau comprend en outre un ou plusieurs parmi :
- un panneau (D) configuré comme un support (11) pour une enseigne de taxi (12),
- un panneau (E) portant un réseau prédéterminé de trous prévus pour recevoir un ou plusieurs accessoire(s), comme un porte-bagages, à différentes positions qui peuvent être sélectionnées comme souhaité, un panneau (F) auquel un module de commande de conduite autonome et/ou un module GPS est/sont associé(s).

3. Véhicule électrique selon la revendication 2, **caractérisé en ce que** ledit support (11) pour l'enseigne de taxi (12) est adapté pour être mis en rotation autour d'un axe vertical entre une position de non fonctionnement et une position de fonctionnement dans laquelle l'enseigne de taxi (12) est agencé transversalement par rapport à la direction longitudinale du véhicule.
